# EUROPEAN PATENT APPLICATION

(11) **EP 2 073 139 A1**
(43) Date of publication of application: **24.06.2009**
(21) Application number: 08157380.0
(22) Date of filing: 01.06.2008
(51) Int. Cl.: G06F 21/20

(54) **Method of inputting password**

(30) Priority: 14.12.2007 TW 96148048
(71) Applicant: Yang, Vince, Beipu Township Hsin chu 314 (TW)
(72) Inventor: Yang, Vince, Beipu Township Hsin chu 314 (TW)
(74) Representative: Negrini, Elena

(57) **Abstract**

The present invention discloses a method of inputting a password, and a background pattern is provided for helping a user to remember a password position and prevent the password from being stolen by others. The method of inputting a password sets a number of password characters on the background pattern, so that the user can remember at least one password position from the background pattern, and input a password character shown at the password position into a system. Therefore, the method can use the background pattern to help the user to remember the password position and prevent the password from being stolen by others.

## Description

### FIELD OF THE INVENTION

The present invention relates to a method of inputting a password, and more particularly to a method that provides a background pattern to help a user to remember a password position and prevent the password from being stolen by others.

### BACKGROUND OF THE INVENTION

In recent years, it is undoubted that password is an effective tool for protecting the priority of a using right, regardless of a door security system for restricting the entrance of unauthorized people or a computer or an information server system for restricting the access of information. Unquestionably, maintaining the secrecy of a password is a prerequisite condition of protecting a using right. To improve the secrecy of a password, many designs and inventions focus on the security of transmitting a password via a network and adopt new software or hardware to prevent the password from being intercepted by a third party, or increase the level of difficulty of interpreting the password. However, a password may be obtained intentionally or unintentionally by unauthorized persons, even if the password is transmitted safely via the network It is particularly difficult to avoid an operating environment such as a public computer or workstation in a library, an office or any public place with unauthorized people around. For example, an authorized employee or a general resident may input a password in order to enter into a restricted area or a house when there are unauthorized people around, and the same problem also applies to the popular automatic transfer machines. The aforementioned situations are common in our daily life or work place in these days, and thus finding a way of protecting the password from others in the process of entering the password demands immediate attentions and feasible solutions. Besides the security of inputting a password, a password with alphanumeric characters can be cracked easily by repeated attempts of an automatic program. In other words, a traditional password cannot prevent intruders via the network effectively.

Therefore, the present invention provides a method of inputting a password, so that users can use a background pattern to help them remember a password position and prevent the password from being stolen by others.

### SUMMARY OF THE INVENTION

In view of the foregoing shortcomings of the traditional method of inputting a password, the inventor of the present invention based on years of experience in the related field to conduct extensive researches and experiments, and finally invented a method of inputting a password, so that users can use a background pattern to help them remember a password position and prevent the password from being stolen by others.

It is a primary objective of the present invention to provide a method of inputting a password, wherein a background pattern includes a plurality of password characters, so that a user can use the background pattern to remember at least one password position and achieve the effect of preventing the password from being stolen by others when the user inputs a password character displayed at the password position.

To achieve the foregoing objectives, the present invention provides a method of inputting a password comprising the steps of:

Step (1): inputting a preset code into a system by a user;

Step (2): by a display screen display a password image area, a character reminding area and a character input area, wherein the password image area includes a background pattern, and the background pattern displays a plurality of password characters, and the character reminding area is separated into a plurality of character blocks, and each of the character blocks displays a hint character, and the hint characters do not repeat themselves, and the password characters and the hint characters are respectively a text, a number or a symbol;

Step (3): letting the user input the password character displayed by a password position into the character input area;

Step (4): letting the character block be marked, wherein the hint character displayed by a marked character block is the same as the password character inputted from the character input area;

Step (5): repeating Step (3) to Step (4); and

Step (6): ending the procedure.

Therefore, the method of inputting a password of the invention allows users to use a background pattern to help them remember a password position and prevent the password from being stolen by others.

### BRIEF DESCRIPTION OF THE DRAWINGS

Fig. 1 is a first flow chart of a preferred embodiment of the present invention;

Fig. 2 is a first schematic view of a preferred embodiment of the present invention;

Fig. 3 is a second schematic view of a preferred embodiment of the present invention;

Fig. 4 is a third schematic view of a preferred embodiment of the present invention;

Fig. 5 is a second flow chart of a preferred embodiment of the present invention;

Fig. 6 is a third flow chart of a preferred embodiment of the present invention;

Fig. 7 is a fourth flow chart of a preferred embodiment of the present invention;

Fig. 8 is a fifth flow chart of a preferred embodiment of the present invention;

Fig. 9 is a sixth flow chart of a preferred embodiment of the present invention;

Fig. 10 is a seventh flow chart of a preferred embodiment of the present invention;

Fig. 11 is an eighth flow chart of a preferred embodiment of the present invention.

### DESCRIPTION OF THE PREFERRED EMBODIMENT

The above and other objects, features and advantages of the present invention will become apparent from the following detailed description taken with the accompanying drawing.

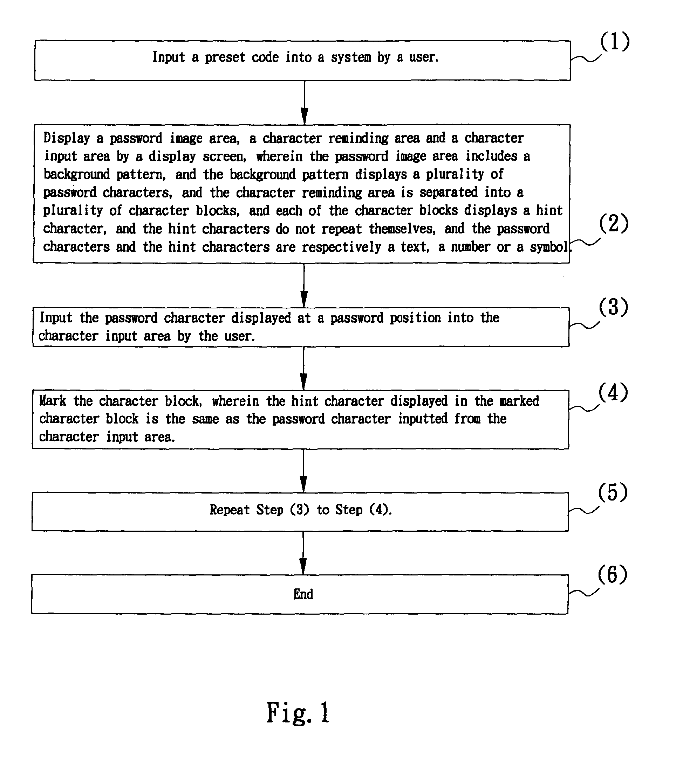

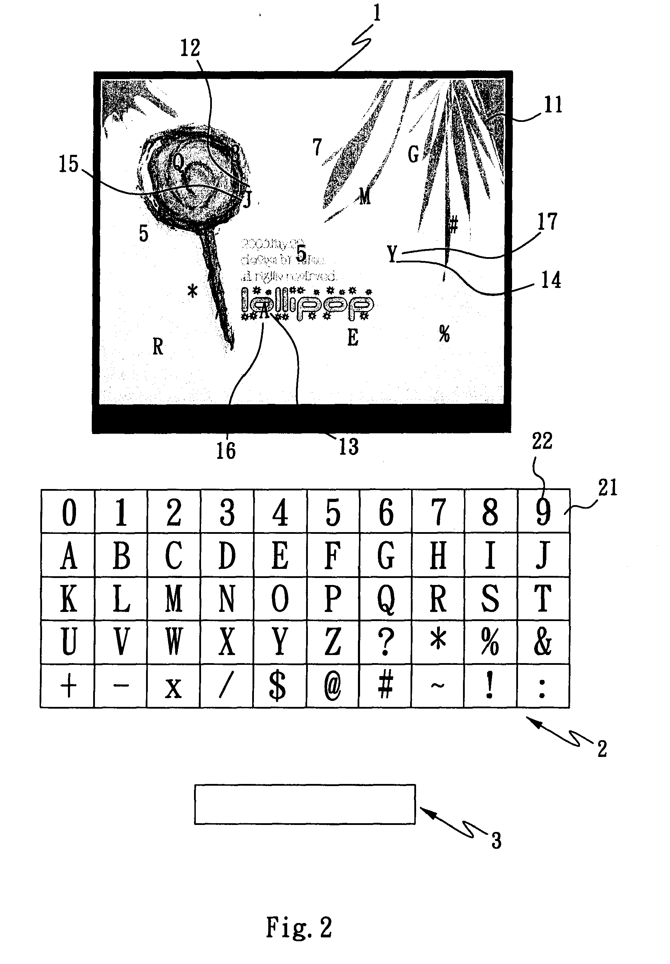

Referring to Figs. 1 and 2 for a flow chart and a schematic view of a preferred embodiment of the present invention, a method of inputting a password in accordance with a preferred embodiment of the present invention comprises the following steps:

In Step (1), a user inputs a preset code into a system (not shown in the figure), and the code is decided by the user or the system when the user registers the code to the system, or the code is provided by the system to the user before the user logs on the system.

In Step (2), a display screen (not shown in the figure) displays a password image area 1, a character reminding area 2 and a character input area 3, wherein the password image area 1 includes a background pattern 11, and the background pattern 11 displays a plurality of password characters12, 13, 14, and the character reminding area 2 is separated into a plurality of character blocks 21, and each of the character blocks 21 displays a hint character 22, and the hint characters 22 do not repeat themselves, and the password characters 12, 13, 14 and the hint characters 22 are respectively a text, a number or a symbol. When the user inputs a preset code into the system each time, the background patterns 11 are the same, and the password characters 12, 13, 14 are generated dynamically by the system, and thus the password characters 12, 13, 14 are different each time. The background pattern 11 is determined by the user or the system when the user registers a password to the system, or the background pattern 11 is provided by the system to the user before the user logs on the system.

In Step (3), the user inputs the password character 12, 13, 14 displayed by a password position 15, 16, 17 into the character input area 3. The user inputs the password character 12, 13, 14 into the character input area 3 by a keyboard (not shown in the figure) or another input device (not shown in the figure), or uses a mouse (not shown in the figure) to click the character block 21 in the character reminding area 2 to input password character 12, 13, 14 into the character input area 3, or touch the character block 21 of the character reminding area 2 in the display screen to input password character 12, 13, 14 into the character input area 3.

In Step (4), the character block 21 is marked, and the hint character 22 displayed by the marked character block 21 is the same as the password character 12 inputted in the character input area 3, and the character block 21 can be marked by changing its color.

In Step (5), Steps (3) to (4) are repeated, wherein the password positions 15, 16, 17 are in a preset order.

Step 6 ends the procedure.

In the steps of the preferred embodiment, the display screen displays the password image area 1, the character reminding area 2 and the character input area 3 after the user enters a preset code into the system. The password image area 1 includes the background pattern 11, and the background pattern 11 displays a plurality of password characters 12, 13, 14. The character reminding area 2 is separated into a plurality of character blocks 21, and each of the character blocks 21 displays a hint character 22, and the hint characters 22 do not repeat themselves, and the password characters 12, 13, 14 and the hint characters 22 are respectively a text, a number or a symbol. The user enters the password characters 12, 13, 14 displayed by the password positions 15, 16, 17 in a preset order into the character input area 3, and the character block 21 is marked. The hint character 22 displayed by the marked character block 21 is the same as the password character 12 inputted from the character input area 3. The password inputted from the character input area 3 is J(12)A(13)Y(14).

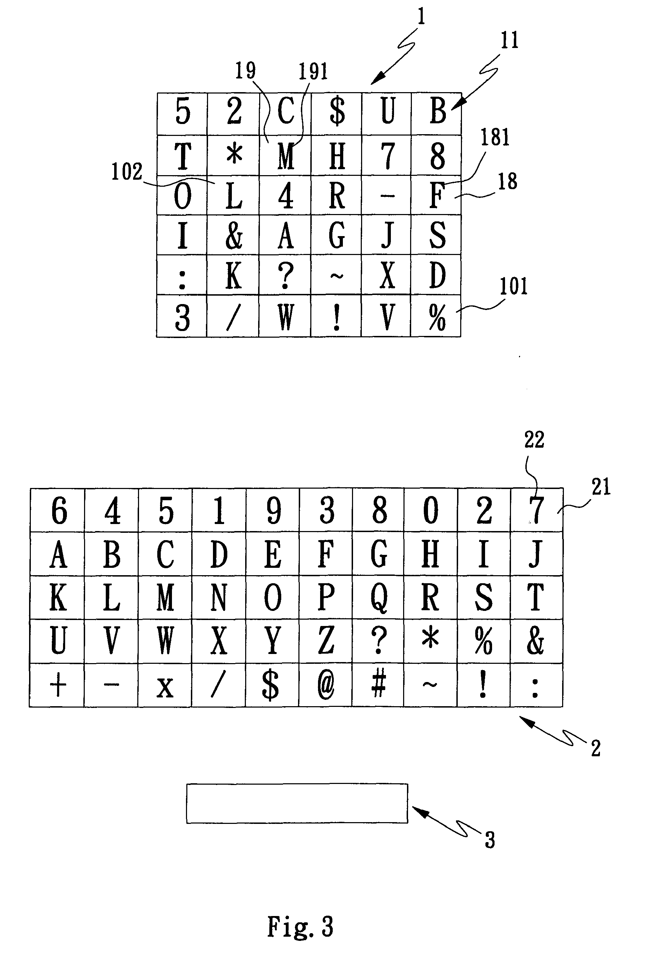

Referring to Fig. 3 for a second schematic view of a preferred embodiment of the present invention, the method of this embodiment derives a second preferred embodiment. In Step (2) of the method of inputting a password in accordance with a second preferred embodiment of the invention, the background pattern 11 is separated into a plurality of password blocks 18, 19 by a matrix, and the two sequentially set password blocks 18, 19 are two first indicating blocks, and two password characters F181, M191 displayed by the two first indicating blocks preset an indicating direction (such as Up, Down, Left or Right) and an indicating number. In Step (3), the user uses the first indicating block as a starting point, the indicating direction as a moving direction, and the indicating number as a moving block number to find the password position from the matrix.

In the procedure of the second preferred embodiment, two password blocks 18, 19 are preset sequentially as two first indicating blocks, and two password characters F181, M191 displayed by the two first indicating blocks preset an indicating direction (Down and Right) and preset an indicating number (3 and 5) respectively, and then the two first indicating blocks are used as a starting point, the indicating direction as a moving direction, and the indicating number as a moving block number, to find the two password positions 101, 102 from the matrix. The password inputted from the character input area 3 is %L.

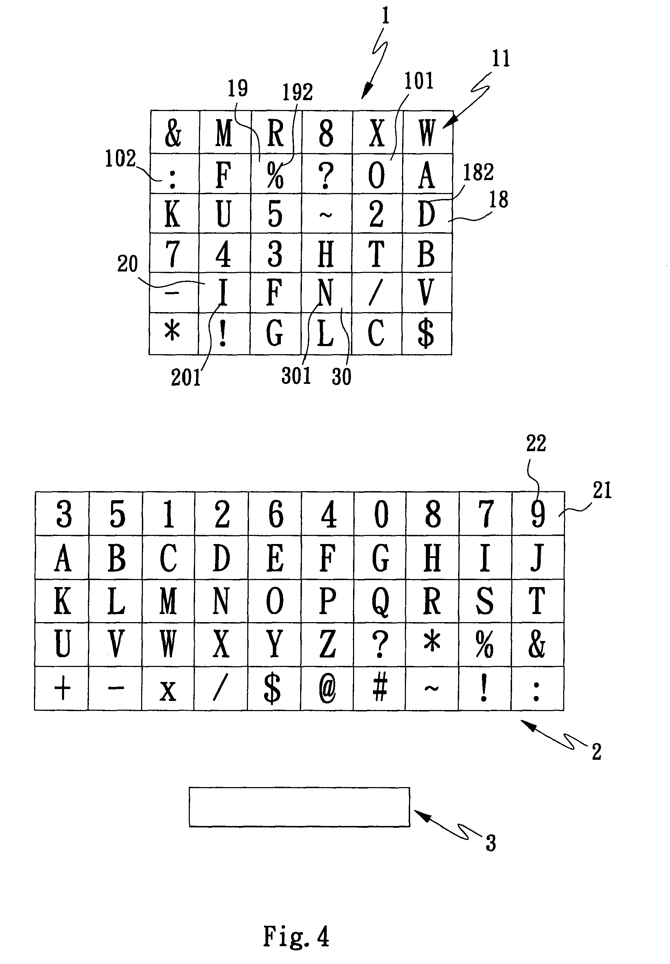

Referring to Fig. 4 for a third preferred embodiment of the present invention, the method of the previous embodiment can be used to derive the third preferred embodiment. In Step (2) of the method of inputting a password in accordance with the third preferred embodiment of the present invention, the background pattern 11 is separated into a plurality of password blocks 18, 19, 20, 30 by a matrix, and two password blocks 18, 19 are preset sequentially as two first indicating blocks, and two password blocks 20, 30 corresponding to the two password blocks 18, 19 are preset sequentially as two second indicating blocks, and two password characters D182, %192 displayed in the two first indicating blocks respectively preset an indicating direction (such as Up, Down, Left or Right), and two password characters I201, N301 displayed by the two second indicating blocks respectively preset an indicating number. In Step (3), the user uses the first indicating block or the second indicating block as a starting point, the indicating direction as a moving direction, and the indicating number as a moving block number to find the password position from the matrix.

In the procedure of the third preferred embodiment, two password blocks 18, 19 are preset sequentially as two first indicating blocks, and two password blocks 20, 30 corresponding to the two password blocks 18, 19 are preset as two second indicating blocks, and two password characters D182, %192 displayed by the two first indicating blocks respectively preset an indicating direction (Up and Left), and two password characters I201, N301 displayed by the two second indicating blocks preset an indicating number (7 and 2), and the two first indicating blocks are used sequentially as a starting point, the indicating direction as a moving direction, and the indicating number as a moving block number to find two password positions 101, 102 from the matrix. The password inputted from the character input area 3 is O:.

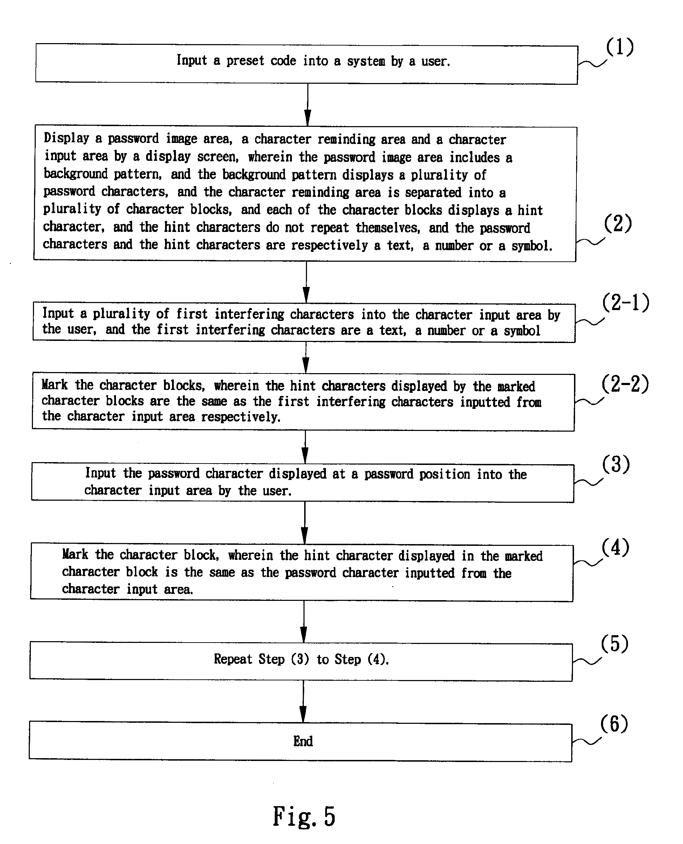

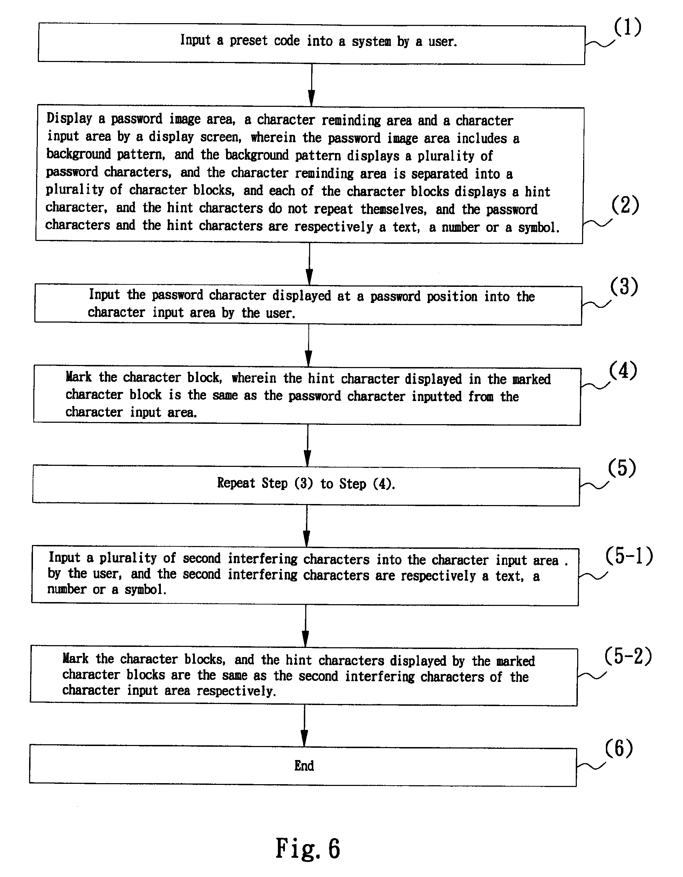

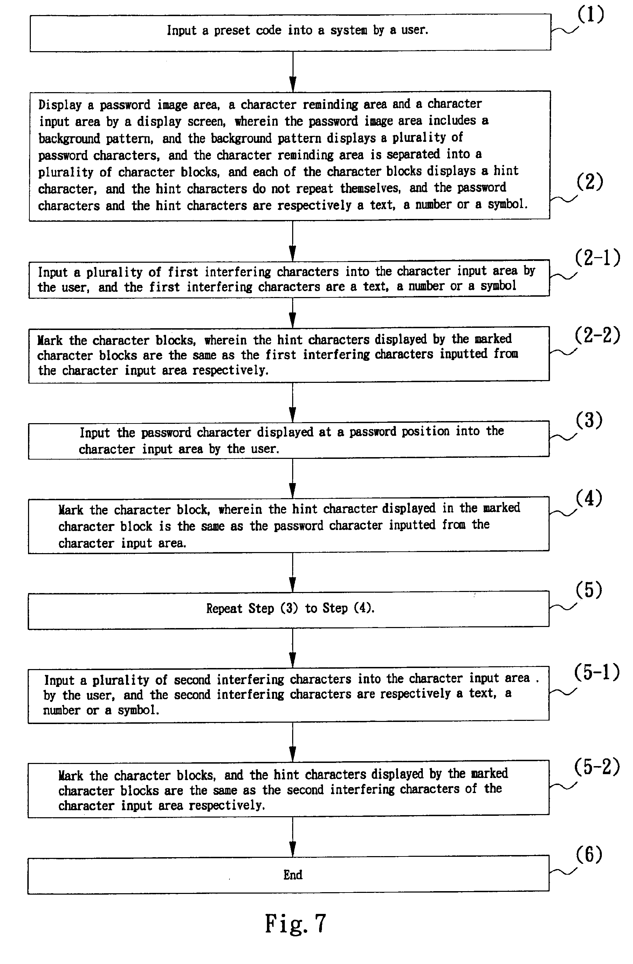

Referring to Figs. 5 to 7 for the second to fourth flow charts in accordance with preferred embodiments of the present invention, Step (2-1) can be added between Step (2) and Step (3) in the method of the first to the third preferred embodiments of the invention. In Step (2-1), the user inputs a plurality of first interfering characters into the character input area, and the first interfering characters are respectively a text, a number or a symbol. In Step (2-2), the character blocks are marked, and the hint characters displayed by the marked character blocks are the same as the first interfering characters inputted from the character input area respectively.

Alternatively, Step (5-1) can be added between Step (5) and Step (6). In Step (5-1), the user inputs a plurality of second interfering characters into the character input area, and the second interfering characters are respectively a text, a number or a symbol. In Step (5-2), the character blocks are marked, and the hint characters displayed by the marked character blocks are the same as the second interfering characters of the character input area respectively.

Alternatively, Steps (2-1) can be added between Step (2) and Step (3). In Step (2-1), the user inputs a plurality of first interfering characters into the character input area, and the first interfering characters are respectively a text, a number or a symbol. In Step (2-2), the character blocks are marked, and the hint characters displayed by the marked character blocks are the same as the first interfering characters inputted from the character input area respectively. Step (5-1) is added between Step (5) and Step (6), such that the user enters a plurality of second interfering characters into the character input area, and the second interfering characters are respectively a text, a number or a symbol. In Step (5-2), the character blocks are marked, and the hint characters displayed by the marked character blocks are the same as the second interfering characters inputted from the character input area respectively.

The first interfering characters can be a plurality of first random characters, a plurality of first default characters or their combination. The second interfering characters can be a plurality of second random characters, a plurality of second default characters or their combination. If the interfering characters can interfere an unauthorized person's determination of a correct password position when such unauthorized person tries to steal the password, the preset characters can even prevent a system administrator from stealing a correct password position.

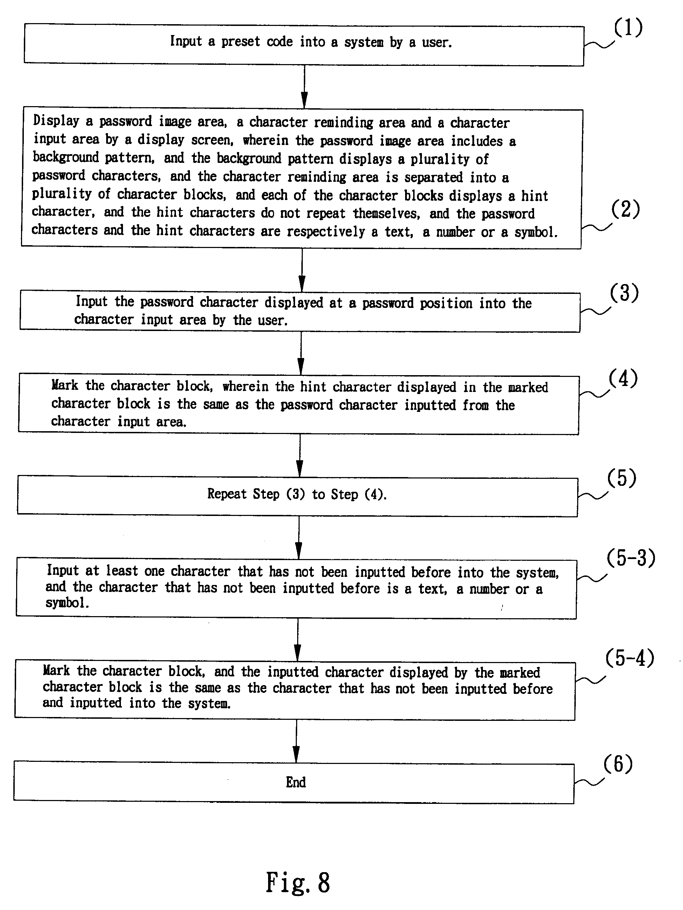

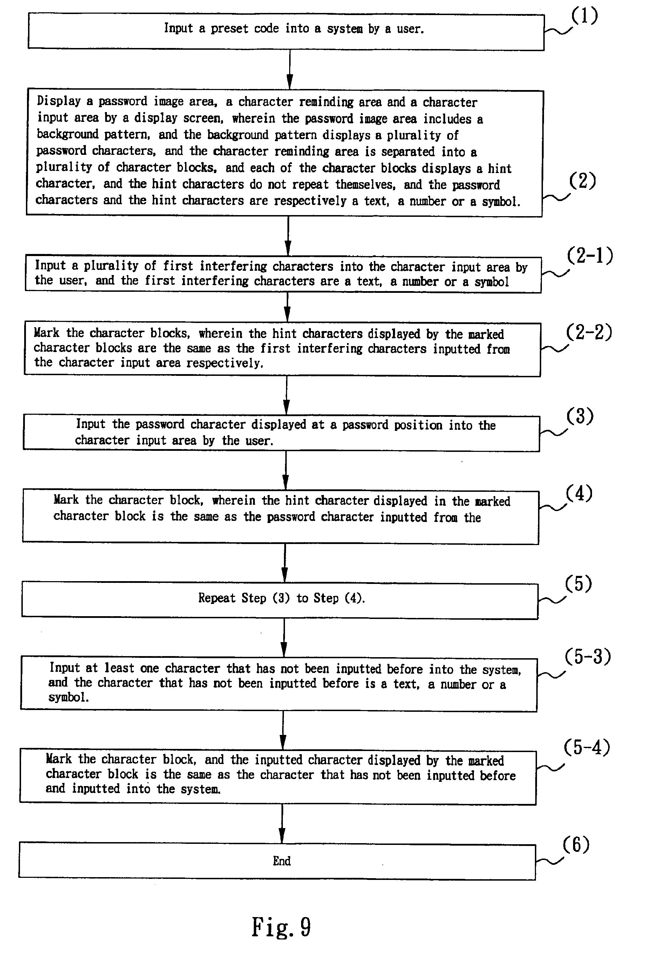

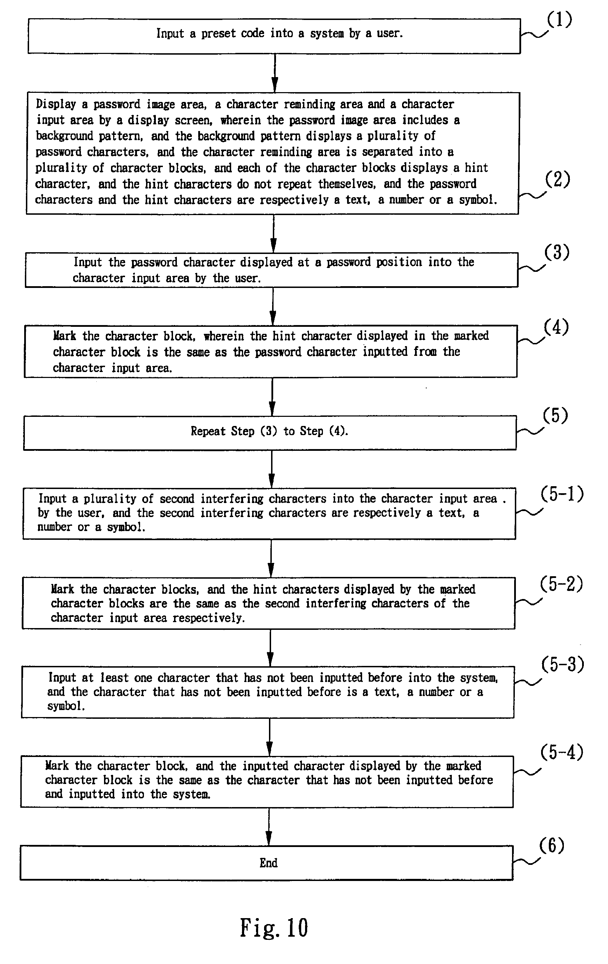

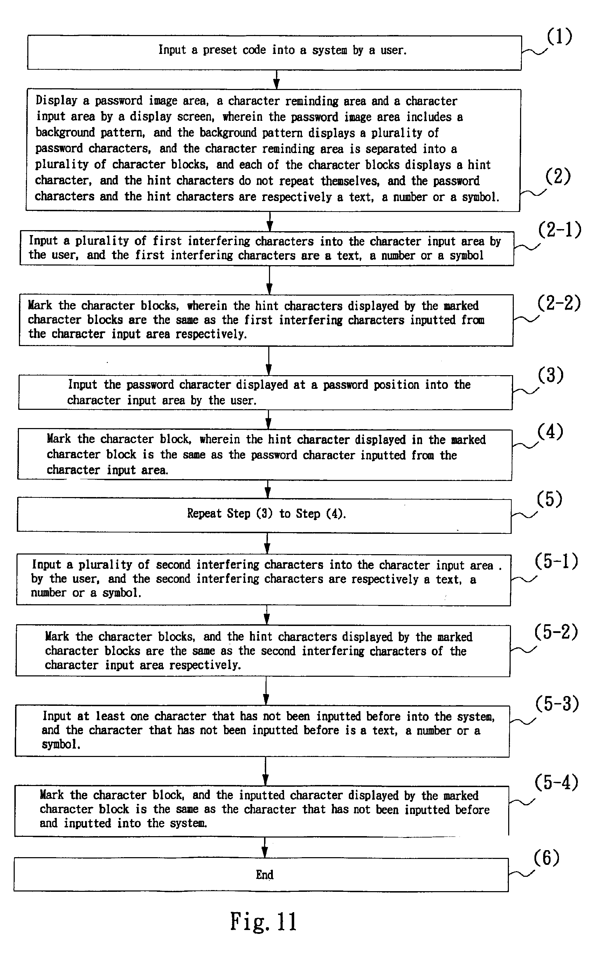

Referring to Figs. 8 to 11 for the fifth to eighth flow charts of preferred embodiments of the present invention, Steps (5-3) can be added between Step (5) and Step (6) of the method in accordance with the first to third preferred embodiments of the present invention. In Step (5-3), the user inputs at least one character (which has not been inputted before) into the system, and such character is a text, a number or a symbol. In Step (5-4), the character block is marked, and the inputted character displayed by the marked character block is the same as the character (which has not been inputted before) inputted into the system.

Alternatively, Step (2-1) can be added between Step (2) and Step (3). In Step (2-1), the user inputs a plurality of first interfering characters into the character input area, and the first interfering characters are respectively a text, a number or a symbol. In Step (2-2), the character blocks are marked, and the hint characters displayed by the marked character blocks are the same as the first interfering characters inputted from the character input area respectively. Further, Step (5-3) can be added between Step (5) and Step (6). In Step (5-3), the user inputs ? at least one character (which has not entered before) into the system, and such character is a text, a number or a symbol. In Step (5-4), the character block is marked, and the inputted character displayed by the marked character block is the same as the character (which has not entered before) inputted into the system.

Alternatively, Step (5-1) can be added between Step (5) and Step (6). In Step (5-1), the user inputs a plurality of second interfering characters into the character input area, and the second interfering characters are respectively a text, a number or a symbol. In Step (5-2), the character blocks are marked, and the hint characters displayed by the marked character blocks are the same as the second interfering characters inputted from the character input area. In Step (5-3), the user inputs at least one character (which has not been inputted before) into the system, and such character is a text, a number or a symbol. In Step (5-4), the character block is marked, and the inputted character displayed by the marked character block is the same as the character (which has not been inputted before) inputted into the system.

Alternatively, Step (2-1) can be added between Step (2) and Step (3). In Step (2-1), the user inputs a plurality of first interfering characters into the character input area, and the first interfering characters are respectively a text, a number or a symbol. In Step (2-2), the character blocks are marked, and the hint characters displayed by the marked character blocks are the same as the first interfering characters inputted from the character input area respectively. Step (5-1) can be added between Step (5) and Step (6). In Step (5-1), the user inputs a plurality of second interfering characters into the character input area, and the second interfering characters are respectively a text, a number or a symbol. In Step (5-2), the character blocks are marked, and the hint characters displayed by the marked character blocks are the same as the second interfering characters inputted from the character input area respectively. In Step (5-3), the user inputs at least one character (which is not entered before) into the system, and such character is a text, a number or a symbol. In Step (5-4), the character block is marked, and the inputted character displayed by the marked character block is the same as the character (which is not entered before) inputted into the system.

The characters (which are not entered before) are the hint characters displayed by unmarked character blocks in the character reminding area. In other words, the characters are the remaining characters that have never been entered into the system yet. Finally, the user inputs at least one character (which is not entered before) or all of the remaining characters into the system. If an unauthorized person intends to steal a password entered by the user during the process of entering the password, the characters (that have not be entered before) can interfere the unauthorized person's determination of a correct password position. Further, all characters inputted into the system can be repeated, and such arrangement can further interfere the unauthorized person's determination of a correct password position.

In summation of the description above, the background pattern includes a plurality of password characters, so that a user can use the background pattern to remember at least one password position, and prevent the password from being stolen by unauthorized people when the user enters a password character shown at the password position. Obviously, the invention fully meets the requirements of the current market and complies with the requirements of patent applications, and thus the invention is duly filed for patent application.

## Claims

1. A method of inputting a password, comprising the steps of:
(1) inputting a preset code into a system by a user;
(2) displaying a password image area, a character reminding area and a character input area by a display screen, wherein the password image area includes a background pattern, and the background pattern displays a plurality of password characters, and the character reminding area is separated into a plurality of character blocks, and each of the character blocks displays a hint character, and the hint characters do not repeat themselves, and the password characters and the hint characters are respectively a text, a number or a symbol;
(3) inputting the password character displayed by a password position into the character input area by the user;
(4) marking the character block, wherein the hint character displayed in the marked character block is the same as the password character inputted from the character input area;
(5) repeating Steps (3) to (4);
(6) ending the procedure.

2. The method of inputting a password as recited in claim 1, wherein the password positions are arranged in a default sequence.

3. The method of inputting a password as recited in claim 1, wherein in Step (2), the background pattern is separated into a plurality of password blocks by a matrix, and at least one password block is preset as at least one first indicating block, such that the password character displayed by the first indicating block presets an indicating direction and an indicating number; in Step (3), the user uses the first indicating block as a starting point, the indicating direction as a moving direction, and the indicating number as a moving block number to find the password position from the matrix; or in Step (2), the background pattern is separated into a plurality of password blocks by a matrix and at least one the password block is preset as at least one first indicating block and at least one password block as at least one second indicating block, and the second indicating block corresponds to the first indicating block, and the password character displayed by the first indicating block presets an indicating direction, and the password character displayed by the second indicating block presets an indicating number; in Step (3), the user uses the first indicating block or the second indicating block as a starting point, the indicating direction as a moving direction, and the indicating number as a moving block number to find the password position from the matrix.

4. The method of inputting a password as recited in claim 1, 2 or 3, wherein the Step (2) further comprises a Step (2-1) for the user to input a plurality of first interfering characters into the character input area, and the first interfering characters are respectively a text, a number or a symbol; and a Step (2-2) for marking the character blocks, and the hint characters displayed by the marked character blocks are the same as the first interfering characters inputted by the character input area respectively.

5. The method of inputting a password as recited in claim 1, 2 or 3, wherein the Step (5) further comprises a Step (5-1) for the user to input a plurality of second interfering characters into the character input area, and the second interfering characters are respectively a text, a number or a symbol; and a Step (5-2) for marking the character blocks, and the hint characters displayed by the marked character blocks are the same as the second interfering characters inputted by the character input area respectively.

6. The method of inputting a password as recited in claim 4, wherein the Step (5) further comprises a Step (5-1) for the user to input a plurality of second interfering characters into the character input area, and the second interfering characters are respectively a text, a number or a symbol; and a Step (5-2) for marking the character blocks, and the hint characters displayed by the marked character blocks are the same as the second interfering characters inputted by the character input area respectively.

7. The method of inputting a password as recited in claim 1, wherein the code is determined by the user or the system when the user registers the code to the system, or the code is provided by the system to the user before the user logs on the system.

8. The method of inputting a password as recited in claim 1, wherein the background patterns are the same for each time when the user inputs the preset code into the system, and the password characters are generated dynamically by the system, and the password characters displayed each time are different.

9. The method of inputting a password as recited in claim 8, wherein the background pattern is determined by the user or the system when the user registers the background pattern to the system, or the background pattern is provided by the system to the user before the user logs on the system.

10. The method of inputting a password as recited in claim 1, wherein the user inputs the password character into the character input area by a keyboard or another input device, or the user clicks the character block in the character reminding area by a mouse to input the password character into the character input area, or the user touches the character block of the character reminding area in the display screen to input the password character into the character input area.

11. The method of inputting a password as recited in claim 1, wherein the character block is marked by changing a color.

12. The method of inputting a password as recited in claim 4, wherein the first interfering characters are a plurality of first random characters, a plurality of first default characters or their combination.

13. The method of inputting a password as recited in claim 5, wherein the second interfering characters are a plurality of second random characters, plurality of second default characters or their combination.

14. The method of inputting a password as recited in claim 6, wherein the second interfering characters are a plurality of second random characters, a plurality of second default characters or their combination.

15. The method of inputting a password as recited in claim 1, 2 or 3, wherein the Step (5) further comprises a Step (5-3) for the user to input at least one character that has not been inputted before into the system, and the character that has not been inputted before is a text, a number or a symbol; and a Step (5-4) for marking the character block, and the inputted character displayed by the marked character block is the same as the character that has not been inputted before and inputted into the system.

16. The method of inputting a password as recited in claim 4, wherein the Step (5) further comprises a Step (5-3) for the user to input at least one character that has not been inputted before into the system, and the character that has not been inputted before is a text, a number or a symbol; and a Step (5-4) for marking the character block, and the inputted character displayed by the marked character block is the same as the character that has not been inputted before and inputted into the system.

17. The method of inputting a password as recited in claim 5, wherein the Step (5) further comprises a Step (5-3) for the user to input at least one character that has not been inputted before into the system, and the character that has not been inputted before is a text, a number or a symbol; and a Step (5-4) for marking the character block, and the inputted character displayed by the marked character block is the same as the character that has not been inputted before and inputted into the system.

18. The method of inputting a password as recited in claim 6, wherein the Step (5) further comprises a Step (5-3) for the user to input at least one character which has not been inputted before into the system, and the character which has not been inputted before is a text, a number or a symbol; and a Step (5-4) for marking the character block, and the inputted character displayed by the marked character block is the same as the character which has not been inputted before and inputted into the system.
